# DEMANDE DE BREVET EUROPEEN

(11) **EP 0 644 033 A1**
(43) Date de publication de la demande: **22.03.1995**
(21) Numéro de dépôt: 94402065.0
(22) Date de dépôt: 16.09.1994
(51) Int. Cl.: B29C 47/02, B29C 47/04, B60J 10/08

(54) **Profilé d'étanchéité comprenant une couche textile et son procédé de réalisation**

(30) Priorité: 16.09.1993 FR 9311033
(71) Demandeur: HUTCHINSON, F-75008 Paris (FR)
(72) Inventeur: Planché, Pierre, F-45490 Treilles (FR)
(74) Mandataire: Orès, Bernard

(57) **Abrégé**

La présente invention se rapporte à un profilé d'étanchéité (1), notamment pour véhicule automobile, par exemple du type coulisse, lécheur ou joint de porte et à son procédé de réalisation.

Selon l'invention un procédé de fabrication d'un profilé d'étanchéité comprend les étapes consistant à :
a) extruder un profilé, avantageusement en élastomère ;
b) déposer une couche d'adhérence (12) sur une surface du profilé ;
c) appliquer un tissu (11) sur la couche d'adhérence (12).

La présente invention s'applique principalement à la réalisation de profilés d'étanchéité, notamment pour véhicules automobiles.

## Description

La présente invention se rapporte à un profilé d'étanchéité, notamment pour véhicule automobile, par exemple du type coulisse, lécheur ou joint de porte et à son procédé de réalisation.

Les profilés d'étanchéité participent à l'impression de confort procurée aux passagers d'un véhicule automobile en assurant l'étanchéité ainsi que l'isolation phonique et thermique. De plus, les profilés apparents influencent de façon notable l'esthétique du véhicule. D'excellentes performances ont été obtenues avec des profilés réalisés en élastomère dont les lèvres et/ou les tubes présentent une élasticité assurant une isolation poussée.

Toutefois, le contact d'une vitre, d'une pièce de carrosserie ou de la peau d'un passager avec un tel profilé peut engendrer un bruit désagréable, notamment un crissement. De plus, un profilé apparent de type connu ne s'accorde pas avec l'esthétique de certains véhicules.

C'est par conséquent un but de la présente invention d'offrir un profilé d'étanchéité, notamment en élastomère, comprenant une surface recouverte avec un matériau ayant des propriétés mécaniques et/ou esthétiques désirées, notamment avec du tissu.

C'est également un but de la présente invention d'offrir un tel profilé comprenant un tissu épousant exactement une de ces surfaces.

C'est, aussi, un but de la présente invention d'offrir un tel profilé présentant une très forte cohésion entre l'élastomère et le tissu.

C'est, également, un but de la présente invention d'offrir un tel profilé muni d'un tissu de couleur vive.

C'est, aussi, un but de la présente invention d'offrir un tel profilé muni d'un tissu présentant une grande résistance à l'usure.

C'est, également, un but de la présente invention d'offrir un procédé de fabrication d'un tel profilé ayant un faible coût de revient, notamment un procédé de fabrication en continu.

Ces buts sont atteints par un procédé de fabrication d'un profilé d'étanchéité comprenant les étapes consistant à:
a) extruder un profilé, avantageusement en élastomère;
b) déposer une couche d'adhérence sur une surface du profilé;
c) appliquer un tissu sur la couche d'adhérence.

L'invention a principalement pour objet un procédé de fabrication d'un profilé d'étanchéité, notamment pour véhicule automobile, comportant une étape de co-extrusion, mettant en oeuvre une filière, d'un élément en matériau de type élastomère et d'une couche d'adhérisation et une étape d'application d'un matériau en feuille ou d'un tissu sur la couche d'adhérisation, caractérisé en ce que le matériau en feuille ou en tissu passe à travers la filière de co-extrusion.

L'invention a également pour objet un procédé, caractérisé en ce que lors de la coextrusion, la température de l'élément en matériau du type élastomère est comprise entre 80°C et 90°C et en ce que la température de la couche d'adhérisation en polyoléfine est sensiblement égale à 130°C.

L'invention a également pour objet un procédé, caractérisé en ce que la couche d'adhérisation est un film dont l'épaisseur est comprise entre 0,01 et 0,3 mm.

L'invention a également pour objet un profilé d'étanchéité, caractérisé en ce qu'il est obtenu par le procédé selon l'invention.

L'invention a également pour objet un profilé d'étanchéité, caractérisé en ce que le matériau en feuille ou tissu recouvre l'élément en matériau de type élastomère sur sensiblement toute sa longueur.

L'invention a également pour objet un profilé d'étanchéité, caractérisé en ce que la couche d'adhérisation est constituée par une matière plastique, de préférence une polyoléfine, notamment du polyéthylène.

L'invention sera mieux comprise au moyen de la description ci-après et des figures annexées données comme des exemples non limitatifs et sur lesquelles:
- la figure 1 est une vue en coupe d'un exemple de réalisation d'un profilé selon la présente invention;
- la figure 2 est un schéma illustrant un premier exemple de mise en oeuvre du procédé selon la présente invention;
- la figure 3 est un schéma illustrant un deuxième exemple de mise en oeuvre du procédé selon la présente invention.

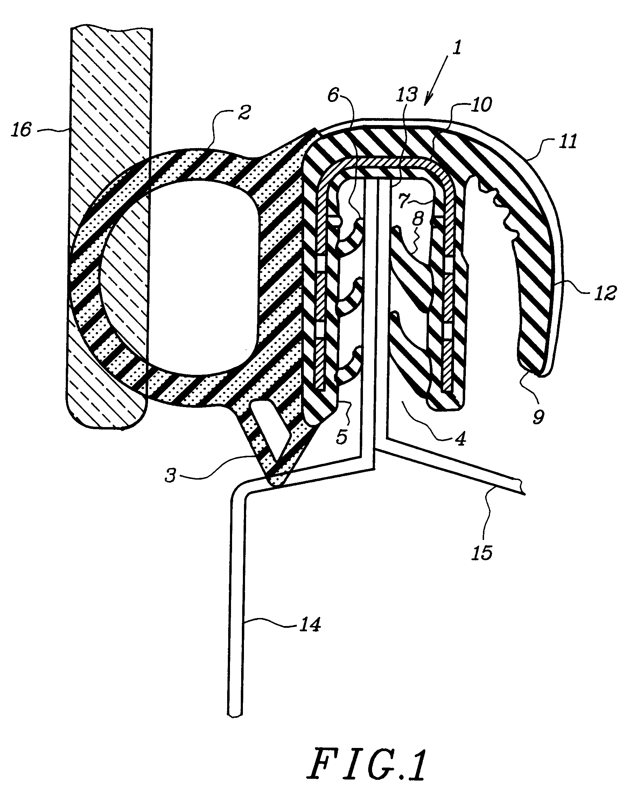

Sur les figures 1 à 3, on a utilisé les mêmes références pour désigner les mêmes éléments.

Sur la figure 1, on peut voir un profilé 1 selon la présente invention comportant un premier tube 2 sensiblement cylindrique, un second tube 3 de section sensiblement triangulaire, et une gorge en U 4 dont une première paroi interne 5 comporte trois lèvres de montage 6 et dont une seconde paroi interne 7 comporte deux lèvres de montage 8 sensiblement plus grandes que les trois lèvres de montage 6. Selon les habitudes de l'industrie des élastomères, les tubes 2 et 3 sont représentés dans une condition non contrainte. Le profilé 1 selon la présente invention comporte en outre une lèvre d'étanchéité 9 sensiblement parallèle aux parois 5 et 7 de la gorge en U 4 et disposée adjacente à la gorge en U et à l'opposé du tube 2.

Avantageusement, le profilé 1 selon la présente invention est rigidifié au niveau de la gorge 4 par une armature 10 en U, par exemple en un feuillard métallique. Les tubes 2 et 3 sont avantageusement réalisés en caoutchouc cellulaire, les parois de la gorge 4 et la lèvre 9 en caoutchouc du type EPDM.

Une feuille, ou un morceau de tissu 11 décoratif, et/ou ayant les propriétés mécaniques désirées, est adhérisée au profilé 1, avantageusement par l'intermédiaire d'une couche d'adhérisation par exemple en matière plastique avantageusement en polyoléfine et de préférence en polyéthylène, par exemple au niveau de la surface externe du fond de la gorge en U 4 et de la lèvre d'étanchéité 9. Le tissu 11 est par exemple du coton.

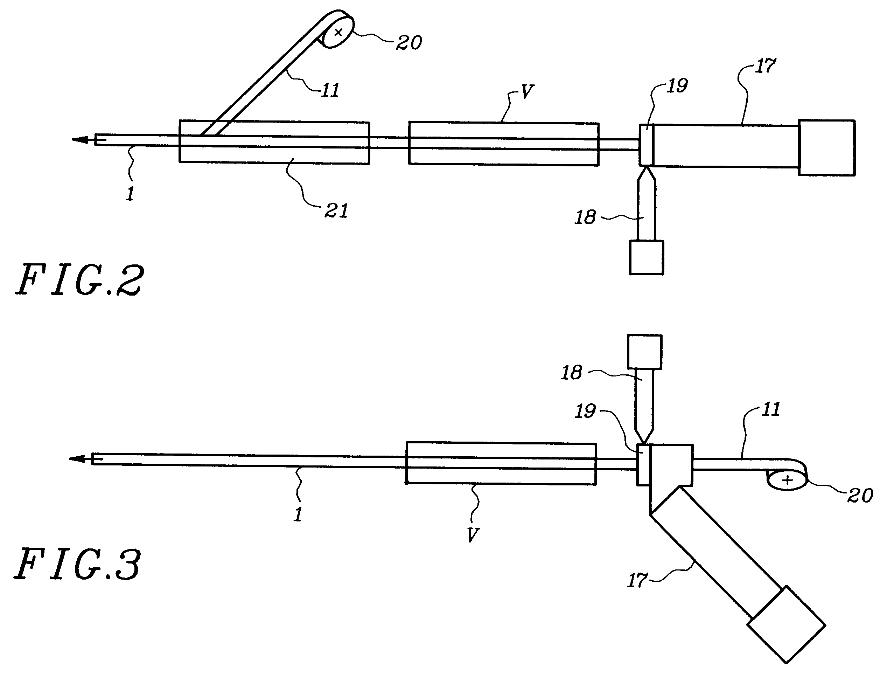

Une bonne cohésion de l'élément en élastomère du profilé 1 et du tissu 11 est obtenue par un contrôle des températures de l'élastomère et du matériau de la couche d'adhérence 12, ainsi que de l'épaisseur de ladite couche d'adhérence 12 au moment de son dépôt. Ces paramètres sont aisément déterminés expérimentalement. Par exemple, d'excellents résultats ont été obtenus par la mise en oeuvre des procédés de coextrusion décrits ci-après en référence aux figures 2 et 3 en mettant en oeuvre un caoutchouc du type EPDM porté à une température comprise entre 80 et 90°C et une couche de polyéthylène de 0,15 mm portée à 130°C.

Dans l'exemple illustré sur la figure 1, la gorge 4 est fixée sur un bord 13 de deux tôles 14 et 15 de la porte d'un véhicule automobile, le tube 2 prend appui sur une vitre 16, le tube 3 prend appui sur la tôle 14 et la lèvre 9 prend appui sur une pièce de la carrosserie (non représentée) dudit véhicule.

Sur la figure 2, on peut voir un schéma illustrant un exemple de mise en oeuvre du procédé selon la présente invention avec dépôt du tissu 11 postérieurement à la coextrusion des éléments en élastomère et de la couche d'adhérisation 12 du profilé 1. Le dispositif de la figure 2 comporte une extrudeuse 17 assurant l'extrusion du ou des élément(s) en élastomère et une extrudeuse 18 assurant l'extrusion de la polyoléfine, par exemple du polyéthylène formant la couche d'adhérisation. Les extrudeuses 17 et 18 aboutissent à une filière 19 de coextrusion. Le ou les élément(s) en élastomère du profilé 1 en cours de réalisation sont ensuite vulcanisés, par exemple dans un dispositif de chauffage V. Le tissu 11, par exemple déroulé à partir d'un moyen de stockage 20 est appliqué, par un dispositif 21 de dépose de tissu, sur la couche d'adhérisation 12, avant sa solidification par refroidissement. Par exemple, dans le cas du polyéthylène, la température de la couche d'adhérisation lors du dépôt du tissu 11 est comprise entre 100 et 300°C.

Sur la figure 3, on peut voir l'exemple préféré de mise en oeuvre du procédé selon la présente invention dans lequel le tissu 11 passe à travers la filière 19 de coextrusion du ou des élément(s) en élastomère provenant de l'extrudeuse 17 et de la couche d'adhérisation 12 provenant de l'extrudeuse 18. Le profilé 1 en sortie de la filière 19 est vulcanisé, par exemple à l'aide d'un dispositif de chauffage V.

Sur les figures 2 et 3, pour des raisons de clarté, on n'a pas représenté l'enrobage et une éventuelle mise en forme de l'armature 10 qui passe également à travers la filière de coextrusion 19.

Il est bien entendu que la présente invention n'est pas limitée à la réalisation de profilés 1 par coextrusion. De même, l'invention n'est pas limitée aux profilés d'étanchéité 1 en élastomère, mais s'applique également aux profilés comportant également des éléments en plastomère ou en mélange d'élastomère et de plastomère.

La présente invention s'applique principalement à la réalisation de profilés d'étanchéité, notamment pour véhicules automobiles.

## Revendications

1. Procédé de fabrication d'un profilé d'étanchéité, notamment pour véhicule automobile, comportant une étape de co-extrusion, mettant en oeuvre une filière (19), d'un élément en matériau de type élastomère et d'une couche d'adhérisation (12) et une étape d'application d'un matériau en feuille ou d'un tissu (11) sur la couche d'adhérisation (12), caractérisé en ce que le matériau en feuille ou en tissu (11) passe à travers la filière (19) de co-extrusion.

2. Procédé selon la revendication 1, caractérisé en ce que lors de la coextrusion, la température de l'élément en matériau du type élastomère est comprise entre 80°C et 90°C et en ce que la température de la couche d'adhérisation (12) en polyoléfine est sensiblement égale à 130°C.

3. Procédé selon la revendication 1 ou 2, caractérisé en ce que la couche d'adhérisation (12) est un film dont l'épaisseur est comprise entre 0,01 et 0,3 mm.

4. Profilé d'étanchéité caractérisé en ce qu'il est obtenu par le procédé selon l'une quelconque des revendications 1 à 3.

5. Profilé d'étanchéité selon la revendication 4, caractérisé en ce que le matériau en feuille ou tissu (11) recouvre l'élément en matériau de type élastomère sur sensiblement toute sa longueur.

6. Profilé d'étanchéité selon la revendication 4 ou 5, caractérisé en ce que la couche d'adhérisation (12) est constituée par une matière plastique, de préférence une polyoléfine, notamment du polyéthylène.
